# EUROPEAN PATENT SPECIFICATION

(11) **EP 1 616 304 B1**
(45) Date of publication and mention of the grant of the patent: **09.05.2012**
(21) Application number: 04723245.9
(22) Date of filing: 25.03.2004
(51) Int. Cl.: G06T 15/50, G06T 5/00, H04N 13/00

(54) **IMAGE PROCESSING**
BILDVERARBEITUNG
TRAITEMENT D'IMAGE

(30) Priority: 29.03.2003 GB 0307307; 12.12.2003 GB 0328839
(43) Date of publication of application: 18.01.2006
(73) Proprietor: Atelier Vision Limited, Bristol BS20 7RU (GB)
(72) Inventor: JUPE, John, Clapton in Gordano, Bristol BS20 7RU (GB)
(74) Representative: Bailey, Richard Alan
(86) International application number: PCT/GB2004/001262
(87) International publication number: WO 2004/088594

(56) References cited:
- EP-A- 0 514 266
- US-A- 6 157 733
- US-A1- 2002 167 512
- SWAIN C T: "Integration of monocular cues to create depth effect" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 2745-2748, XP010225724 ISBN: 0-8186-7919-0

## Description

This invention relates to an image processing or manipulation technique, and in particular to a technique that may be used to enhance our appreciation of 3D depth and form depicted in base 2D images and derivative virtual reality (VR) environments. Images processed in this manner may be of improved believability, thus the invention allows an increase in the believability threshold.

When three-dimensional scenes are displayed or depicted using conventional two-dimensional techniques, for example by printing on to paper or the like or displaying on a television, computer monitor or the like, or by projection, although the brain perceives the images displayed as being to some extent three-dimensional in nature, there are occasions when the perception of depth and form in the displayed image is not particularly good. This is thought to be due to the absence of sufficient monocular depth cues in the image to allow the brain to interpret the displayed image fully.

In the following description a distinction is made between 'pictures' and 'images'. The following definitions of pictures and images have been made by Prof Jan Koenderink (Vision Scientist), and the terms as used herein should be interpreted accordingly.

**Picture:** "a real image, an ordered record, such as a video-signal, a photograph, an activity pattern in a neural structure. The order of the picture is purely conventional and exists only with respect to an external agent."

**Images:** "always contain more than pictures because the whole structure of the receiver (a lifetime's expedience) is summed up in them."

This invention relates, at least to some degree, to the isolation of the techniques that transform pictures to images.

The technique of the invention has been developed from theoretical work identifying a new form of illusionary space which has been termed 'image space' (thus distinguishing itself from traditional picture space). Image space acknowledges the individual nature and specialisms of peripheral vision and central vision and also that brain function 'creates' important facets of visual perception by making 'relativistic judgments' between the two. Key to the novelty of this approach is the realization that these new cues rely on as yet unappreciated *monocular* cues and the composition of *monocular* projection. These monocular cues distinguish this method of achieving apparent 3D depth from other techniques that rely on stereo cues deriving from binocular disparity etc. By correctly representing and aligning two projections used in monocular vision by the brain to compose perceived images (the projection known as vision) it is possible to induce the brain to replicate depth and form perceptions that could otherwise only be created by directly observing the 'real setting' from which the pictorial information derived.

'Image Space' can be achieved/ induced in a number of ways pictorially.
1. By imbuing traditional picture space (perspective projection or photographic/ film record) with the required cues.
2. By using the principles to model a new illusionary space to generate novel virtual reality (VR) environments.

It is an object of the invention to provide a system, which may be used in combination with existing techniques, whereby an image may be created or modified to enhance the perception of the depth in the original picture. In each case, image space relies on the incorporation of stimuli from which the brain is able to deduce additional perceptions of depth and form associated with our sense of visual perception.

According to one aspect of the invention there is provided an image processing technique comprising the steps of:
(a) stretching an original picture in the Y-direction by a factor falling within the range of 2-10%;
   selecting a fixation point and disordering the image centring the disordering operation around the fixation point; and
   rotating the image through an angle falling within the range 3-9°;
(b) stretching a copy of the original image in the X-direction by a factor falling within the range of 2-10%; and
   selecting an area of the image around the selected fixation point; and
(c) merging the selected area of the image formed in step (b) with the image formed in step (a).

In step (a), the rotation of the image is preferably in a clockwise direction. A minority of individuals may prefer the image to be rotated in the opposite direction and which the technique is used to produce an image to be viewed by such individuals, the rotation may be undertaken in the anti-clockwise direction.

The disordering operation preferably involves disordering in line with a chosen self-similar fractal disorder pattern.

The image formed as a result of the transformation set out in step (a) will hereinafter be referred to as a Type 1 image, and that produced in the transformation set out in step (b) will be referred to as a Type 2 image.

This technique can be thus be used to:
i) mimic the appearance of the two base projections used by the brain in our monocular projection of the real world by transforming known picture environments.
ii) replicate a typical composition/ structure of these base projections used by the brain to form perceived visual images.

The key to forming a valid composition is the selection of a fixation point, the establishing of a fixation area (conforming to known constraints of central vision) and the correct imposition of conditions prevailing in 'the fixation volume', peripheral vision and around the interface between the Type 1 image and the Type 2 image. As in real time observation, a fixation point needs to be established on the media. The fixation point is the point around which the various transformations techniques are to be centered. It is thought that the enhanced 3D depth and form cues are established by:
1. the brain as it makes relativistic judgments between interface between the two sets of information around central vision.
2. an authentic representation of the specialist rendition of self-similar disordered information in peripheral vision providing a new form of spatial dimension.

Without a central point of alignment (fixation point) from both data sets, it would be impossible for the brain to make the required calculations. The fixation area establishes an area around the fixation point broadly analogous to the extent of central vision. As such, the fixation area establishes the extent of the image to be subjected to the specific conditions of the fixation volume. The fixation volume is a spherical area of influence contained within the fixation area. Any form (object), surface or part of a form that projects into this area of influence is projected in the brain as per the qualitative and quantitative characteristics of image type 2 above.

It follows that any other visual reference to objects outside of this fixation volume contained in the fixation area are referenced as per the image type 1 above.

Areas of central vision outside the fixation volume are referenced as per the characteristics of 'peripheral vision'.

There are a number of typical compositions used by the brain, which utilize aspects, and juxtapositions of the two image types in a way capable of generating the relativistic judgments from which the new cues are deduced.

Images processed in this manner are thought to conform more fully with our projection of real-time monocular observations (visual images) allowing the brain to correctly interpret a fuller range of three-dimensional cues from the 2D image or virtual reality setting. The projection of monocular vision would appear to be compiled from two data sets which allows the brain to have certain degrees of freedom when compiling visual field. It has been noted that these potential compositions have been adapted to suit the specific task being undertaken by the viewer. For example, reading 2D literature requires little 3D information. This order of information could even provide a distraction to the task in hand. In this situation only one data set is used reducing the visual information being processed A specialist composition is used when detailed spatial analysis is required. One where half of central vision is suppressed allowing for aspects of Type 1 information to spread into central vision up to the fixation point. This process allows the important brain function responsible for making relativistic judgements and hence enhances form cues to play over the actual object held in fixation. Aspects of this composition are often revealed in the work of visual artists painting still life material.

The nature and structure of information contained in peripheral vision is still largely unresolved by vision science. This invention uses the qualities of self-similar (fractal) disorder (not blur) to replicate the order of information projected outside central vision (peripheral vision). This invention identifies a novel step in attributing peripheral vision with an independent 3D dimension centred on fixation. ie, the level of disorder generates out from fixation in every direction. Hence, 2D pictures are transformed to replicate this order of information by building layers of disorder backwards, forwards and outward on the vertical plane from the targeted fixation. This establishes a new form of spatial dimension in the image. For still images this technique is seen to enhance depth perception in the image. However, the real advantage is thought to lie in its ability to impart accurate renditions of perceived movement in moving images. Once mastered, movement around the targeted fixation will now be closer to our perception of movement observed from 'real settings'. This 3D information can be captured for use in the transformation process as a 'depth map' using specialist equipment, for example making use of laser imaging or LED lighting technologies combined into film cameras.

Moving images will also require changes to the targeted fixation points as the action depicted on them develops. Techniques for inducing a change in fixation will be incorporated into action depicted in moving media to lead the viewer through the eye movement procedure. action depicted on them develops. Techniques for inducing a change in fixation will be incorporated into action depicted in moving media to lead the viewer through the eye movement procedure.

The processing technique may require additional steps of fine-tuning around the boundary between the images formed in steps (a) and (b).

Step (a) of the processing technique may further include steps of altering the contrast of Type 1 information by a factor falling within the range of +10-40% and/or decreasing the brightness of the image by a factor falling within the range 2-40%. If contrast is increased in this way, then colour saturation should preferably be reduced to an accommodation level (usually to match the increase of level in contrast).

The technique defined hereinbefore may be performed using a computer on image data derived, for example, from a scanner or digital camera, or on digital picture data obtained or created from other sources including computer programs. However, it will be appreciated that the technique may be performed in other ways, and the invention is not restricted to the specific arrangements or applications described herein.

The invention will further be described, by way of example, with reference to the accompanying drawings, in which:
Figure 1 is an illustration prior to use of the image processing technique;
Figures 2 and 3 illustrate steps of the image processing techniques;
Figures 4 and 5 illustrate the processed form of the illustration of Figure 1;
Figures 6 to 10 are further views illustrating the effect of the process;
Figure 11 is a diagram illustrating part of the process; and
Figure 12 is a diagram illustrating a modification to the technique.

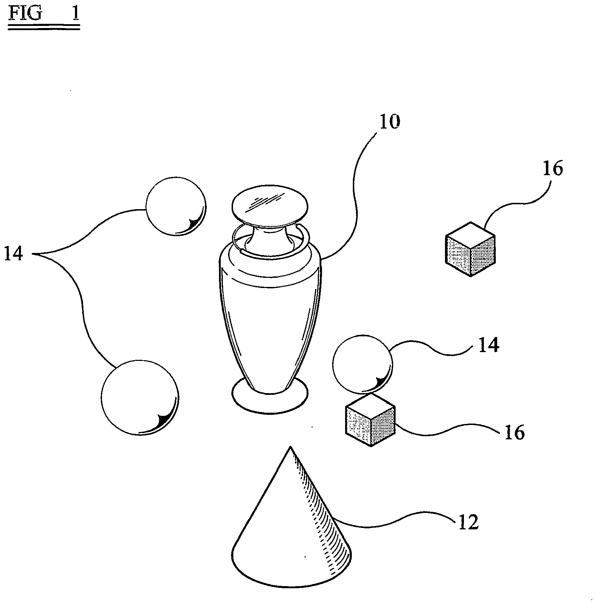

The invention will, initially, be described with reference to the image illustrated in Figure 1. As can clearly be seen, Figure 1 is a computer generated or virtual reality representation of a vase 10, a cone 12, spheres 14 and cubes 16. As each of the objects illustrated are three-dimensional objects, the illustration uses isometric projections to provide depth cues to be interpreted by the brain in an attempt to make the objects appear to be an accurate representation of their form in three-dimensional space. Each object is isolated from all of the other objects, and no central perspective cues to indicate the relative positions of the objects are present. As a result, it is difficult for the brain to interpret the image to determine, for example, the relative sizes of the objects and their positions in three dimensional space. In the image, both of the cubes are drawn as the same size and are perceived as being the same size despite one being further away than the other.

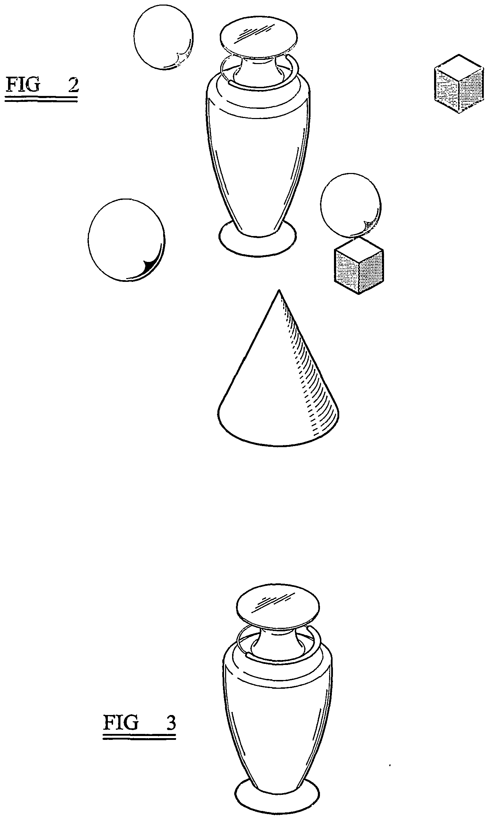

In accordance with the invention, the base image of Figure 1 is processed to form an image of improved form. This is achieved by taking the image of Figure 1 and performing a transformation thereon whereby the image is stretched in the Y-direction (vertical) by a factor falling within the range 2-10%, preferably about 5%, is disordered and is rotated through an angle falling within the range 3-9° clockwise, preferably 6° clockwise. Figure 2 illustrates the effect of the stretching and rotation of the image, but (for clarity) not the impact of disordering the image. The order in which these operations may be varied, but the values/factors used may need to be varied if the order is not as described.

Another copy of the image is stretched by a factor of 2-10% in the X-direction (horizontal). Preferably, it is stretched to ensure a differential with the image in the previous transformation of around 5-20%. A fixation point on the image is selected, and an area around the fixation point is selected, the remainder of the image being deleted. The result of this operation is shown in Figure 3, where the centre of the vase has been selected as the fixation point.

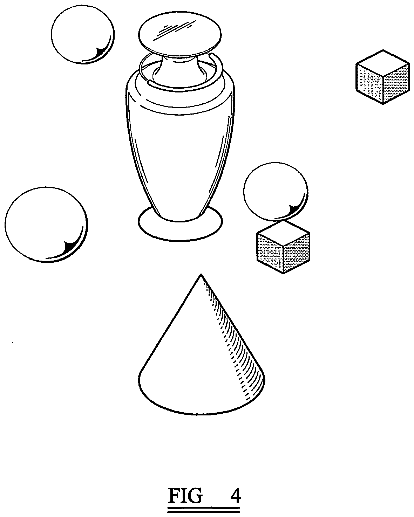

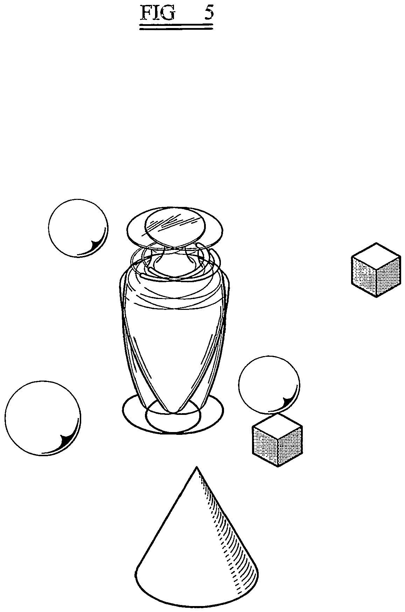

The two images produced in this manner are superimposed upon one another. The images may be superimposed using several different techniques. Figure 4 illustrates the effect of taking the image of Figure 2 and simply replacing an area around the fixation point with the image of Figure 3. Figure 5 illustrates the result of an alternative superimposition technique wherein the two images are overlaid and parts of both images are visible, the vase taking the form of a fused form. The fixation area is the vase; this comprises a combined form fused from both image types 1 and 2 in what at first seems an odd looking conjunction. However, when the centre of the vase is fixated, the two identities are merged by the brain into a single percept. This percept is of a more three dimensional vase. This capacity for increased 3D percept is now extended to all the other objects in the picture. For example the further of the two cubes is now perceived to be larger than the closer cube.

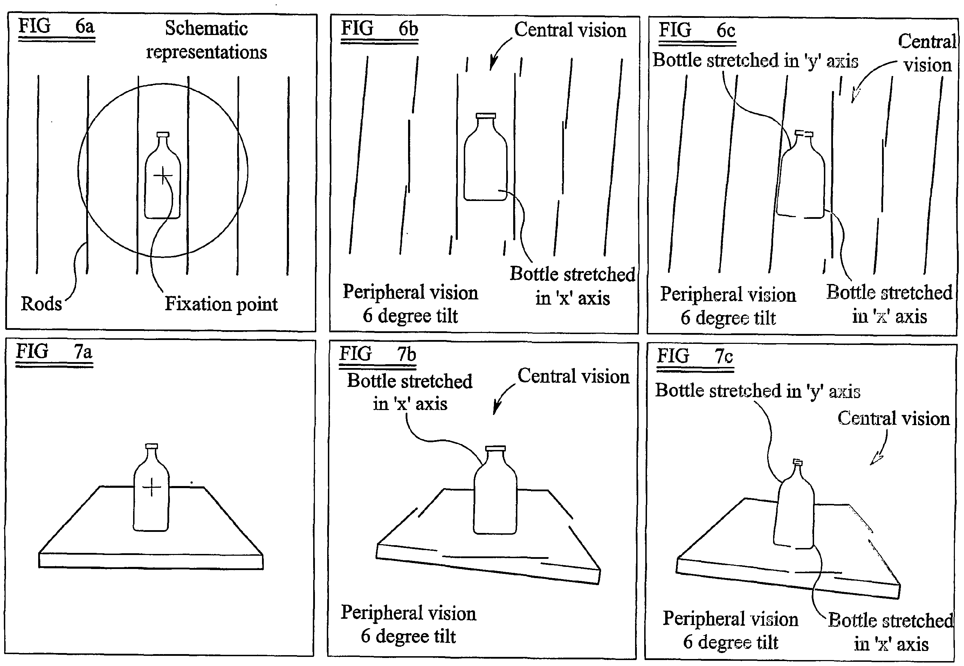

Referring next to Figures 6a, 6b and 6c, Figure 6a shows in schematic form a bottle located between six vertically extending bars. The illustration of Figure 6a is modified or processed in accordance with an embodiment of the invention to form the image of Figure 6b. For clarity, again, the disordering operation has been omitted. When the image of Figure 6b is viewed by fixating upon the center of the bottle, an improved degree of depth can be seen in the image as compared to the picture of Figure 6a, the image of Figure 6b containing a greater level of depth cues for the brain to interpret that the illustration shown in Figure 6a. Figure 6c is another image formed using the process described hereinbefore, but using a different, smaller part of the original illustration as the fixation area.

Figures 7a, 7b and 7c are similar to Figures 6a, 6b and 6c but illustrating a bottle 24 positioned upon a table 26.

This percept of 3D form and depth is, in some ways, analogous to the percept obtained by perspective space. However, it is now thought that perspective cues are not the principle method by which spatial depth is obtained in central vision or through the full extent of visual field. Rather, we see spatial depth and form by a process that involves our visual system making relativistic judgments between two distinct data sets or image types. The arrangement identified above stimulates the brain to engage with this process when observing 2D space, providing us with cues more conversant with our appreciation of real settings.

The new image space allows us to create depth in a similar way to the way it is perceived in our actual visual appreciation of our surroundings. Looking at the new image space will be closer to an actual act of real time observation.

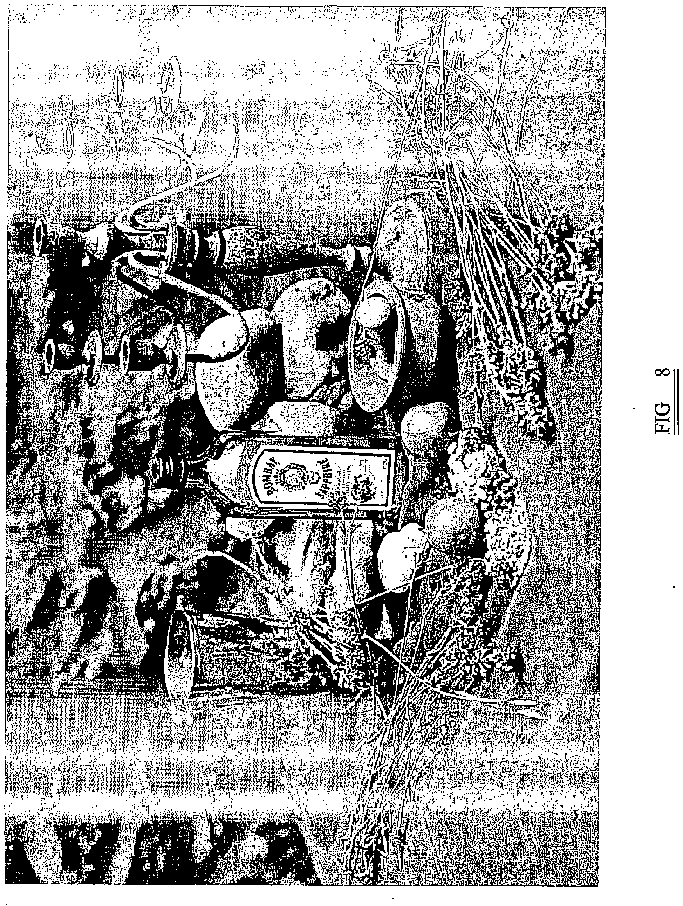

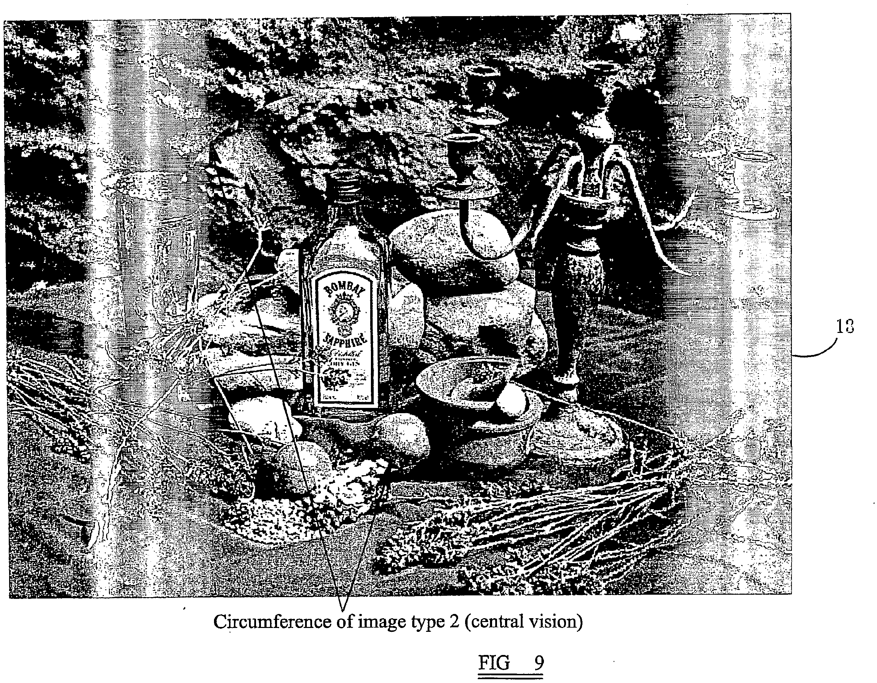

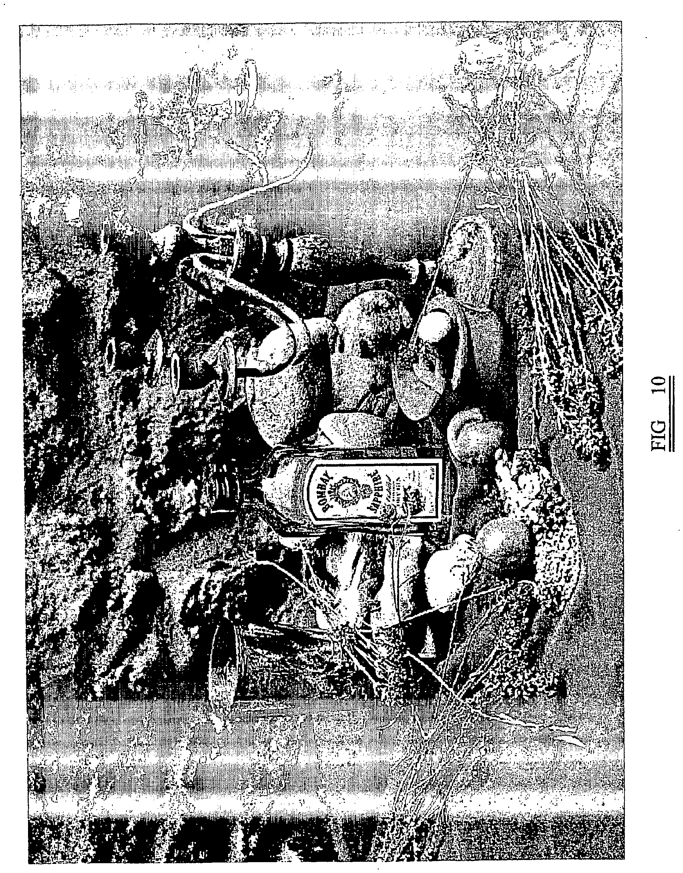

Referring next to Figures 8 to 10, an original digitised photograph of a real setting is shown in Figure 8. The key to forming a valid composition is the selection of a fixation point and fixation area, and the correct imposition of conditions prevailing in 'the fixation volume' and peripheral vision. In the present case, the centre of the bottle has been selected as the fixation point. Figure 9 shows the effect of performing the transformations described hereinbefore, but omitting the disordering operation for clarity, and simply replacing the part of the image around the fixation point on one image with the relevant part of the other image. Items within the fixation area, established round the fixation point, are represented as image type 2 with some of the associated qualitative and quantitative transformations. Outside the fixation area, all objects and surfaces are rendered as per image type 1 with the associated qualitative and quantitative transformations. As can be seen in Figure 9, the boundary 18 between the two images in the merged image is clearly visible. Figure 10 illustrates the result of a modified superimposition technique which removes or reduces the impact of the boundary between the images, and shows the establishment of the fixation volume where all surfaces and objects not contained by the spherical influence of the fixation volume are also rendered as per image type 1.

For example; around the neck of the bottle the stones of the wall, although within the circumference of the fixation area of Figure 9, are too far from the bottle to be included in the fixation volume and so are referenced as per image Type 1.

For example; one arm of the candelabra penetrates the fixation volume and so is referenced as per image Type 2 while the rest of the object is outside this area of influence and so is rendered as per image type 1.

By comparing Figures 9 and 10 with Figure 8 it is apparent that, in addition to the transformations mentioned hereinbefore, the image which has been stretched in the Y-direction has also been modified by increasing the level of contrast and reducing the level of colour saturation. Also the brightness of the image has been reduced. The contrast has been increased by an amount falling within the range 10-40%, preferably about 25%, and the brightness has been reduced by a factor falling within the range 2-40%, preferably about 10%. The toning down of colour saturation is to balance for the effects of higher contrast and is broadly proportional.

It is thought that images processed using the techniques described hereinbefore are of improved or increased resemblance to images projected by the brain. Using this structure/ armature in digitised medial, it will be possible to enter many facets of the differences known to exist between peripheral vision and central vision. Clear and accurate representation of perceived visual image compositions allows an observer of the 2D rendition to engage in additional computations leading to a more viable perception of the real setting being depicted.

An observer of the transformed image will need to look at (fixate on) the selected fixation point to perceive/ appreciate the full impact of the additional cues.

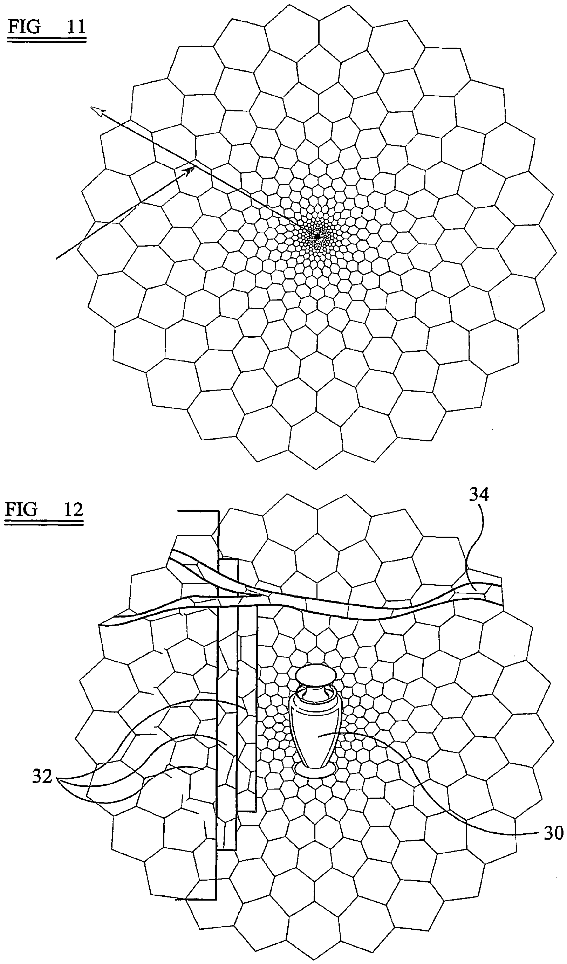

In the description hereinbefore reference has been made to a step of disordering the image. Although a number of disordering techniques may be used, a preferred technique is to incrementally disorder the image using, for example, the sunflower-like fractal pattern shown in Figure 11 to reduce the amount of detail visible in the processed image with increasing distance from the fixation point. The novel aspect included as part of this submission refers to the use of and adaptation of, this pattern into a 3D spatial dimension independent to other 3D cues used in picture information (perspective for example).

Figure 12 is a diagrammatic view illustrating one way in which the disordering operation may, preferably, be performed. The image of Figure 12 includes, at its fixation point, a vase 30. Three flat vertical screens 32 are positioned, in line, in front of and to one side of the vase 30. A tree branch 34 extends across the foreground, in front of all of the other objects. In the arrangements described hereinbefore the disordering operation has been conducted so as to introduce only a small level of disorder into the part of the image immediately surrounding the fixation point, the degree of disorder increasing, in line with the sunflower pattern of Figure 11, with increasing distance from the fixation point. In the arrangement of Figure 12, although this general approach has been taken, the disordering operation has been modified to identify the boundaries or edges of the objects illustrated and to introduce a disruption or jump in the degree of disordering at the edges or boundaries. The disruptions to the degree of disorder give rise to further spatial depth cues in the image for interpretation by the viewer's brain.

It is thought that images processed using the techniques described hereinbefore provide an improved or increased perception or projection of depth to the part of the image around the fixation point and through peripheral areas. The enhanced perception of depth is apparent both where a viewer views the image through both eyes and when the image is viewed using only one eye. Stereo blind subjects perceive the additional depth these transformed images contain. In contrast, the organised depth of stereo based assemblages fail to engage stereo blind individuals.

Although the techniques have been described hereinbefore in relation to the processing of pictures, either in the form of computer generated pictures or photographs, it will be appreciated that this need not be the case and the invention may be applied to a wide range of technologies and display techniques including computer or television displays, projected images, virtual reality displays, animations and printed media. The invention may also find application in, for example, cameras (either for stills or for moving images) which are designed to incorporate a display on which the transformed image can be displayed in "real time" so that the photographer, director or other person involved in the capturing of the image can see how it will be transformed before the image is captured, or completion of the capture takes place. In order to accommodate this, the camera may be provided sensors to allow the depths of objects in the field of vision to be measured at the same time as the image is captured, these two components being used in conjunction with one another and in conjunction with the techniques described hereinbefore in the transformation of the image. Additionally, the location of the fixation point in the field of view will need to be input. This could be set at the centre of the field of view or, using appropriate input means, may be selected by the director, photographer or other individual.

## Claims

1. An image processing technique comprising the steps of:
(a) stretching an original image in the Y-direction (vertical) by a factor falling within the range of 2-10%;
selecting a fixation point and disordering the image centring the disordering operation around the fixation point; and
rotating the image through an angle falling within the range 3-9°;
(b) stretching a copy of the original image in the X-direction (horizontal) by a factor falling within the range of 2-10%; and
selecting an area of the image around the selected fixation point; and
(c) merging the selected area of the image formed in step (b) with the image formed in step (a).

2. A technique as claimed in Claim 1, further comprising an additional step of fine tuning the boundary between the images formed in steps (a) and (b).

3. A technique as claimed in Claim 1 or Claim 2, wherein step (a) of the processing technique further includes steps of altering the contrast by a factor falling within the range of 10-40% and/or decreasing the colour saturation of the image by a factor falling within the range 10-40%.

4. A technique according to Claim 3, further comprising a step of decreasing the brightness by a factor falling within the range 2-40%.

5. A technique according to any one of the preceding claims, wherein the rotation is undertaken in the clockwise direction.

6. A technique according to any one of the preceding claims, wherein the disordering operation of step (a) involves disordering the image in line with a self-similar fractal disorder pattern.

7. A technique according to any one of the preceding claims, further comprising, in step (a), identifying at least one boundary or edge of at least one object and introducing a disruption in the degree of disordering at the said boundary or edge.

8. A computer programmed to perform the technique of any of the preceding claims on image data derived from a scanner, a digital camera, or on digital image data obtained or created from other sources including computer programs.

## Patentansprüche

1. Bildverarbeitungstechnik, folgende Schritte umfassend:
(a) Streckung eines ursprünglichen Bildes in der Y-Richtung (vertikal) um einen Faktor, der in den Bereich 2-10% fällt;
Auswahl eines Fixationspunkts und Entordnung des Bildes, wobei die Entordnungsoperation um den Fixationspunkt zentriert ist; und
Rotation des Bildes um einen Winkel, der in den Bereich 3-9° fällt;
(b) Streckung einer Kopie des ursprünglichen Bildes in der X-Richtung (horizontal) um einen Faktor, der in den Bereich 2-10% fällt; und
Auswahl eines Gebiets des Bildes um den ausgewählten Fixationspunkt; und
(c) Mergen des ausgewählten Gebiets des in Schritt (b) geformten Bildes mit dem in Schritt (a) geformten Bild.

2. Technik nach Anspruch 1, außerdem einen zusätzlichen Schritt der Feinabstimmung der Grenze zwischen den in den Schritten (a) und (b) geformten Bildern umfassend.

3. Technik nach Anspruch 1 oder Anspruch 2, worin Schritt (a) der Verarbeitungstechnik außerdem Schritte enthält, den Kontrast um einen Faktor zu ändern, der in den Bereich 10-40% fällt, und/oder die Farbsättigung des Bildes um einen Faktor zu reduzieren, der in den Bereich 10-40% fällt.

4. Technik nach Anspruch 3, außerdem einen Schritt des Reduzierens der Helligkeit um einen Faktor umfassend, der in den Bereich 2-40% fällt.

5. Technik nach einem der vorhergehenden Ansprüche, worin die Rotation rechtsdrehend ausgeführt wird.

6. Technik nach einem der vorhergehenden Ansprüche, worin die Entordnungsoperation von Schritt (a) das Entordnen des Bildes in Übereinstimmung mit einem selbstähnlichen fraktalen Entordnungsmuster einschließt.

7. Technik nach einem der vorhergehenden Ansprüche, außerdem in Schritt (a) umfassend, mindestens eine Grenze oder einen Rand von mindestens einem Objekt zu identifizieren und eine Unterbrechung im Grad der Entordnung an der Grenze oder am Rand einzuführen.

8. Computer, programmiert zum Ausführen der Technik von einem der vorhergehenden Ansprüche auf Bilddaten, die von einem Scanner oder einer Digitalkamera abgeleitet sind, oder auf digitale Bilddaten, die aus anderen Quellen einschließlich Computerprogrammen erhalten oder erzeugt werden.

## Revendications

1. Technique de traitement d'image comprenant les étapes consistant à :
(a) étirer une image originale dans la direction Y (verticale) d'un facteur compris dans la plage de 2 à 10 % ;
sélectionner un point de fixation et désordonner l'image en centrant l'opération de désordonnement autour du point de fixation ; et
pivoter l'image d'un angle situé dans la plage de 3 à 9° ;
(b) étirer une copie de l'image originale dans la direction X (horizontale) d'un facteur situé dans la plage de 2 à 10 % ; et
sélectionner une zone de l'image autour du point de fixation sélectionné ; et
(c) fusionner la zone sélectionnée de l'image formée dans l'étape (b) avec l'image formée dans l'étape (a).

2. Technique selon la revendication 1, comprenant en outre une étape additionnelle d'ajustement fin de la limite entre les images formées dans les étapes (a) et (b).

3. Technique selon la revendication 1 ou la revendication 2, dans laquelle l'étape (a) de la technique de traitement comprend en outre des étapes de modification du contraste d'un facteur compris dans la plage de 10 à 40 % et/ou diminution de la saturation de couleur de l'image d'un facteur compris dans la plage de 10 à 40 %.

4. Technique selon la revendication 3, comprenant en outre une étape de diminution de la luminosité d'un facteur compris dans la plage de 2 à 40 %.

5. Technique selon l'une quelconque des revendications précédentes, dans laquelle la rotation est effectuée dans la direction horaire.

6. Technique selon l'une quelconque des revendications précédentes, dans laquelle l'opération de désordonnement de l'étape (a) comprend le désordonnement de l'image en ligne avec un motif de désordonnement fractal autosemblable.

7. Technique selon l'une quelconque des revendications précédentes, comprenant en outre, dans l'étape (a), l'identification d'au moins une limite ou un bord d'au moins un objet et introduction d'une rupture du degré de désordonnement à ladite limite ou audit bord.

8. Ordinateur programmé pour exécuter la technique de l'une quelconque des revendications précédentes sur les données d'image dérivées d'un scanner, un appareil photo numérique, ou sur des données d'image numérique obtenues ou créées à partir d'autres sources comprenant des programmes informatiques.
